# EUROPEAN PATENT APPLICATION

(11) **EP 3 135 938 A1**
(43) Date of publication of application: **01.03.2017**
(21) Application number: 16178049.9
(22) Date of filing: 05.07.2016
(51) Int. Cl.: F16D 3/12, F04D 29/26

(54) **FLUID GENERATING APPARATUS**

(30) Priority: 14.08.2015 CN 201510502051
(71) Applicant: Johnson Electric S.A., 3280 Murten (CH)
(72) Inventor: Li, Yue, Hong Kong (HK); Liu, Li Sheng, Hong Kong (HK)
(74) Representative: Hocking, Adrian Niall

(57) **Abstract**

A fluid generating apparatus includes a single phase motor (10) including a stator (13) and a rotor (14) rotatable relative to the stator (13), a fluid generating device including a plurality of blades (42), and a clutch (50) connected between the rotor (14) and the fluid generating device for transmitting torque from the rotor (14) to the fluid generating device. The clutch (50) includes a resilient member (59) having one end connected to the rotor (14) for rotation with the rotor (14) and the other end connected to the fluid generating device for driving the fluid generating device to rotate.

## Description

### FIELD OF THE INVENTION

The present invention relates to fluid generating apparatus, and in particular to a fluid generating apparatus driven by a single phase motor.

### BACKGROUND OF THE INVENTION

When a motor drives an impeller of a blower or a water pump to rotate, if the rotational inertia of the blower or water pump is too large, startup failure may occur because the motor cannot provide sufficient rotation torque at the moment of startup, and the motor may also be damaged in such situation.

When the motor is a single phase motor, the above situation can more easily occur.

### SUMMARY OF THE INVENTION

Thus, there is a desire for a fluid generating apparatus which can address the above mentioned problem.

In this regard, the present invention provides a fluid generating apparatus comprising a single phase motor comprising a stator and a rotor rotatable relative to the stator; a fluid generating device comprising a plurality of blades; and a clutch connected between the rotor and the fluid generating device for transmitting torque from the rotor to the fluid generating device. The clutch comprises a resilient member having one end connected to the rotor for rotation with the rotor and the other end connected to the fluid generating device for driving the fluid generating device to rotate.

Preferably, the clutch allows the rotor to rotate relative to the fluid generating device at the moment of startup of the rotor, after the rotor starts along a predetermined startup direction for a certain period to cause energy stored in the resilient member to reach a certain value, the end of the resilient member connected to the fluid generating device drives the fluid generating device to rotate along the predetermined startup direction.

Preferably, the rotor of the motor comprises a driving shaft, the clutch further comprises a mounting base attached to the driving shaft, and the one end of the resilient member is attached to the mounting base such that the one end of the resilient member is rotatable with the driving shaft synchronously.

Preferably, the single phase motor is a single phase permanent magnet direct current brushless motor or a single phase permanent magnet synchronous motor.

Preferably, the clutch further comprises a protective tube mounted around an outer circumference of the resilient member

Preferably, the resilient member is a helical spring.

Preferably, the single phase motor further comprises a driving circuit, the rotor being a permanent magnet rotor, the stator comprising a stator winding adapted to be connected in series with an AC power source between a first node and a second node, the driving circuit comprising a controllable bidirectional AC switch connected between the first node and the second node; an AC-DC conversion circuit connected in parallel with the controllable bidirectional AC switch between the first node and the second node; a position sensor configured to detect a magnetic pole position of the permanent magnet rotor; and a switch control circuit configured to control the controllable bidirectional AC switch to be switched between a switch-on state and a switch-off state in a predetermined way, based on the magnetic pole position of the permanent magnet rotor and the polarity of the AC power source such that the stator winding drives the rotor to rotate only in the predetermined direction. There is no current flowing through the AC-DC conversion circuit when the first node and the second node are short circuited by the controllable bidirectional AC switch.

Preferably, the rotor comprises a plurality of permanent magnetic poles, the stator comprises a stator core and a stator winding wound around the stator core, the stator core comprises a plurality of stator teeth, each of the stator teeth comprises an end surface facing the rotor permanent magnetic pole, and the major part of the end face is coaxial with the rotor.

Preferably, the rotor is of an outer rotor type and comprises a plurality of magnetic poles, the stator comprises a stator core and a stator winding wound around the stator core, the stator core comprises a plurality of stator teeth allowing the stator winding to wind there around, and when the rotor is at an initial position, the stator tooth is aligned with a junction of two adjacent magnetic poles of the rotor.

Preferably, an uneven air gap is formed between the magnetic poles and end surfaces of the stator teeth, the air gap corresponding each of the magnetic poles is symmetrical about a center line of the each of the magnetic poles, and the air gap at each of the magnetic poles has a radial width gradually increasing from a center to two ends of the each of the magnetic poles.

Preferably, the fluid generating device may be a fan used as a ventilation fan or used for a range hood, or an impeller of a pump such as a drain pump or circulation pump for use in washing machines or dishwashers.

The clutch of the present invention can provide a buffering function when the single phase motor drives a large load such as a fluid generating device, which avoids the motor startup failure and damage to the motor.

### BRIEF DESCRIPTION OF THE DRAWINGS

Fig. 1 illustrates an fluid generating apparatus according to one embodiment of the present invention.
Fig. 2 illustrates a connecting base of a clutch of the fluid generating apparatus of Fig. 1.
Fig. 3 is an assembled view of the fluid generating apparatus of Fig. 1.
Fig. 4 to Fig. 6 illustrate a changing process of the clutch during a motor startup period.
Fig. 7 illustrates a fluid generating apparatus according to a second embodiment of the present invention.
Fig. 8 illustrates a fluid generating apparatus according to a third embodiment of the present invention.
Fig. 9 illustrates a fluid generating apparatus according to a fourth embodiment of the present invention.
Fig. 10 illustrates an impeller utilized in the above embodiments.
Fig. 11 illustrates a single phase motor utilized in the above embodiments.
Fig. 12 is a block diagram of a driving circuit for the motor of Fig. 11.
Fig. 13 illustrates another single phase motor utilized in the above embodiments.

### DETAILED DESCRIPTION OF THE PREFERRED EMBODIMENTS

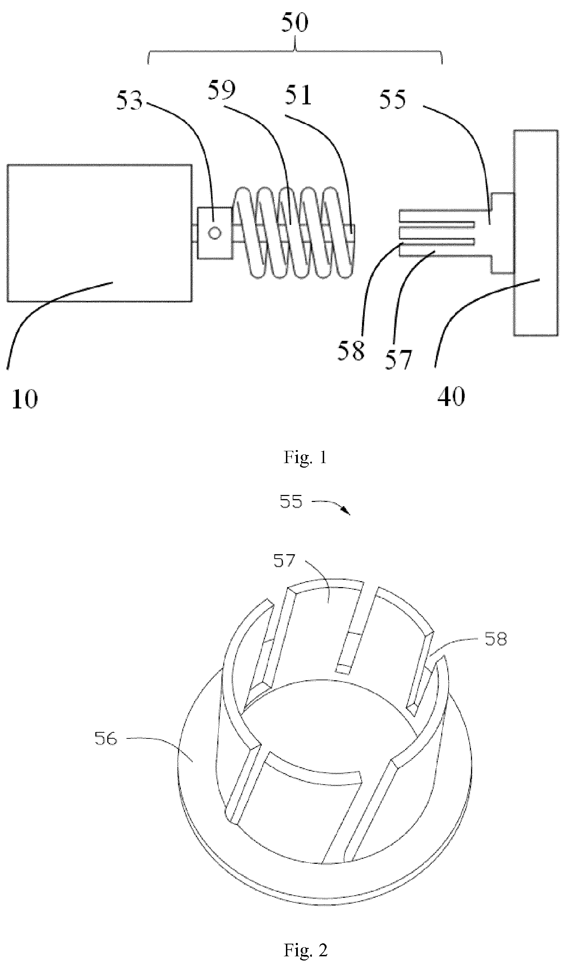

Referring to Fig. 1, a fluid generating apparatus in accordance with a first embodiment of the present invention includes a single phase motor 10, a fluid generating member 40, and a clutch 50 connected between the motor 10 and the impeller 40. The motor 10 drives the fluid generating device 40 to rotate via the clutch 50.

The clutch 50 includes a driving shaft 51, a mounting base 53, a connecting base 55, and a resilient member 59. The driving shaft 51 is connected to the motor 10 and is driven by a rotor of the motor 10. It should be understood that the driving shaft 51 may be an output shaft of the motor or an external driving shaft connected to the motor output shaft or motor rotor via a coupling. In this embodiment, the mounting base 53 is fixedly or detachably attached to the driving shaft 51 for rotation with the driving shaft 51. It should be understood that the mounting base 53 may also be fixedly or detachably attached to other portions of the rotor of the motor. The connecting base 55 is fixedly or detachably attached to the fluid generating device 40 for driving the fluid generating device 40 to rotate. The resilient member 59 is used to control the frictional force between the connecting base 55 and the driving shaft 51, such that the driving shaft 51 is able to drive the fluid generating device 40 to rotate when the rotation speed of the driving shaft 51 increases to a predetermined value. In this embodiment, the motor 10 is a single phase permanent magnet brushless synchronous motor or a single phase permanent magnet direct current brushless motor.

Referring to Fig. 2, the connecting base 55 includes a ring-shaped portion 56 and a plurality of flexible fingers 57 extending outward from one side of the ring-shaped portion 56. The flexible fingers 57 extend in a direction toward the mounting base 53. Slots 58 are formed between adjacent flexible fingers 57. The presence of the slots 58 allows the flexible fingers 57 to deflect inwardly so as to reduce an inner diameter of a space defined by the plurality of flexible fingers 57. Preferably, a minimum value of the inner diameter of the space defined by the plurality of flexible fingers 57 is less than an outer diameter of the driving shaft 51.

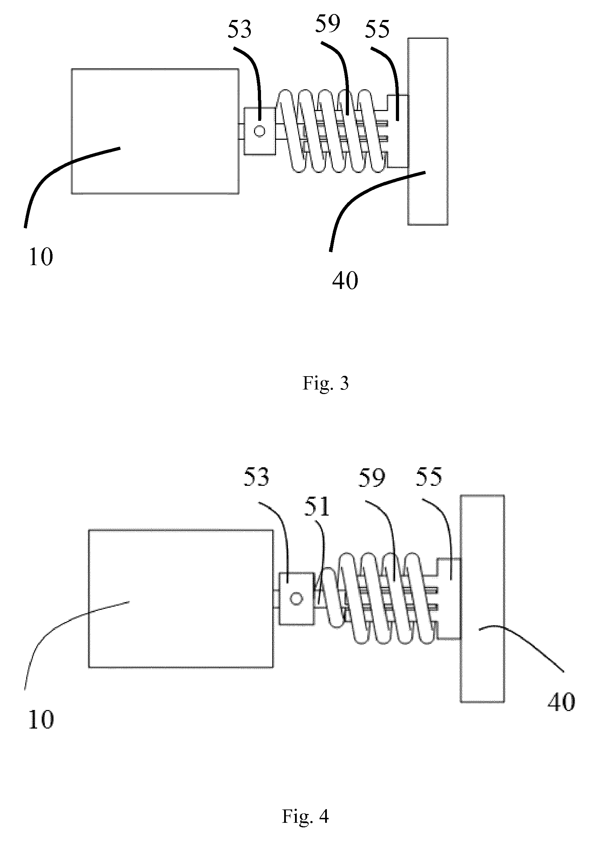

Referring to Fig. 3, in assembly, the plurality of flexible fingers 57 surrounds the driving shaft 51. The resilient member 59 is attached around an outer circumference of the flexible fingers 57. The resilient member 59 is preferably a helical spring. Two opposite ends of the helical spring 59 are fixed to the mounting base 53 and the connecting base 55, respectively. The helical spring surrounds the outer circumference of the flexible fingers 57.

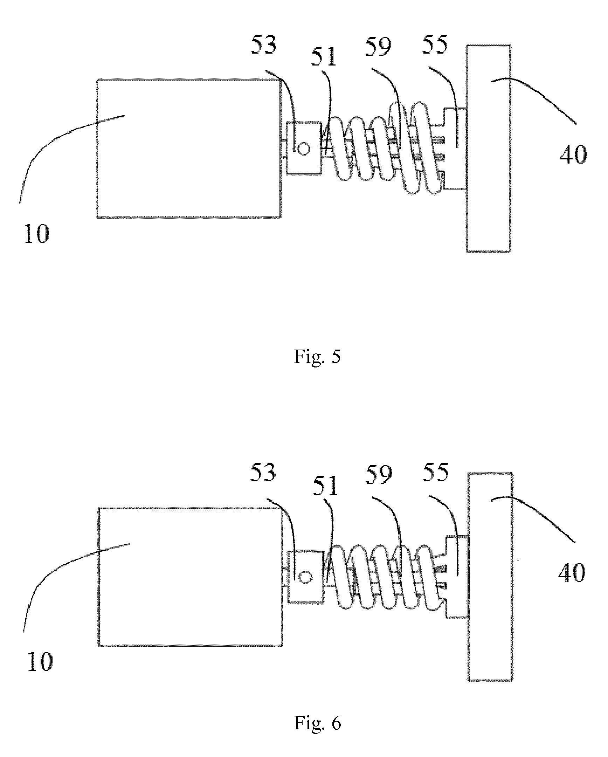

In operation of the motor, the changing process of the clutch is as shown in Fig. 3, Fig. 4, Fig. 5, and Fig. 6, respectively. Specifically, Fig. 3 illustrates the initial/original state of the clutch. When the motor 10 drives the driving shaft 51 with the mounting base 53 to rotate, the end of the resilient member 59 connected to the mounting base 53 rotates along with the mounting base 53, causing the helical spring 59 to gradually shrink from the end connected to the mounting base 53, such that the fingers 57 shrink/deform toward the driving shaft 51. The shrinking of the plurality of fingers 57 causes the fingers 57 to hold/contact the driving shaft 51 with a frictional force therebetween gradually increasing. As the fingers 57 shrink more, the frictional force between the fingers 57 and the driving shaft 51 becomes larger. When the frictional force between the fingers 57 and the driving shaft 51 is large enough, the connecting base 55 is rotated under the driving of the frictional force, such that the fluid generating device 40 is rotated along with the connecting base 55, as shown in Fig. 4 and Fig. 5. When the fluid generating device 40 (or connecting base 55) and the driving shaft 51 have the same rotation speed, the resilient member 59 maintains at a stable compressed/deformed state, as shown in Fig. 6.

In order to increase the frictional force, an inner wall surface of the flexible finger 57 is a rough arc surface with granular bulges/projections thereon.

It should be understood that, when the motor turns from the working state (rotation) to a stop state, the changing process of the clutch is as shown from Fig. 6 to Fig. 3. That is, when the driving shaft 51 slows down or stops, the fluid generating device 40 continues its rotation due to its inertia, resulting in a relative rotation between the connecting base 55 and the mounting base 53. The resilient member 59 is gradually released from the end of the resilient member 59 connected to the connecting base 55 to the end connected to the mounting base 53 and finally returned to its original state as shown in Fig. 3.

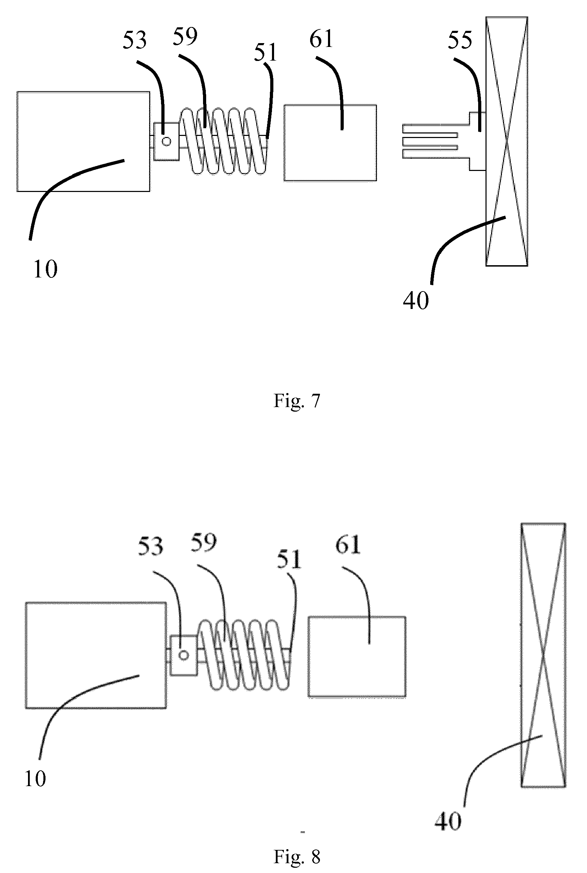

Fig. 7 illustrates a fluid generating apparatus in accordance with a second embodiment of the present invention, which is similar to the first embodiment except adding a protective tube 61 around the outer circumference of resilient member 59. When the motor 10 returns from the working state to the stop state, the driving shaft 51 gradually stops rotating, and the fluid generating device 40 together with the connecting base 55 continue rotating under the inertia. During this course, the resilient member 59 is released from the shrinked state to its free state, the diameter of the resilient member 59 is gradually increased such that the fingers 57 gradually return to their original state and therefore release the driving shaft 51 to avoid rotating the driving shaft 51 in a reverse direction. If the rational inertia of the fluid generating device 40 is too large, the end of the resilient member 59 connected to the connecting base 55 is continued to be rotated relative to the end of the resilient member 59 connected to the mounting base 53 after the resilient member 59 reaches its original state, which causes the resilient member 59 to be de-coiled and the diameter of the resilient member 59 to be increased compared to its original state. The resilient member 59 will probably be damaged. A protective tube 61 is preferably added to surround the resilient member 59 in order to limit/stop over increasing of the outer diameter of the resilient member 59, thereby preventing permanent deformation and hence permanent loss of resiliency of the resilient member 59.

When the motor drives a larger fluid generating device, in order to address the motor startup failure problem due to the fact that the output torque of the motor is not large enough to drive the fluid generating device at the beginning of the startup, the present invention allows the driving shaft 51 to rotate relative to the fluid generating device 40 at the beginning of the motor startup. Only when the output torque of the motor 10 reaches a certain value, the motor drives the fluid generating device 40 to rotate synchronously via the clutch 50, such that the motor 10 can more easily drive a fluid generating device 40 with large rotational inertia without being damaged. In addition, by utilizing the single phase motor and the clutch provided by the present invention, there is no need to increase the size of the motor.

Fig. 8 illustrates a fluid generating apparatus in accordance with a third embodiment of the present invention. In this embodiment, the connecting base 55 is omitted, one end of the helical spring 59 is connected to the mounting base 53, and the other end is connected to the fluid generating device 40 directly. When the motor 10 starts, the driving shaft 51 drives the mounting base 53 to rotate, one end of the helical spring 59 connected to the mounting base 53 rotates therewith, one end of the helical spring 59 connected to the fluid generating device 40 remains stationary due to the resistance of the fluid generating device 40. The helical spring 59 is thus twisted to store energy. At this time, the driving shaft 51 rotates relative to the fluid generating device 40. When the motor 10 operates for a certain period such that the energy stored in the helical spring 59 is large enough to drive the fluid generating device 40 to rotate, the helical spring 59 drives the fluid generating device 40 to rotate synchronously with the driving shaft 51.

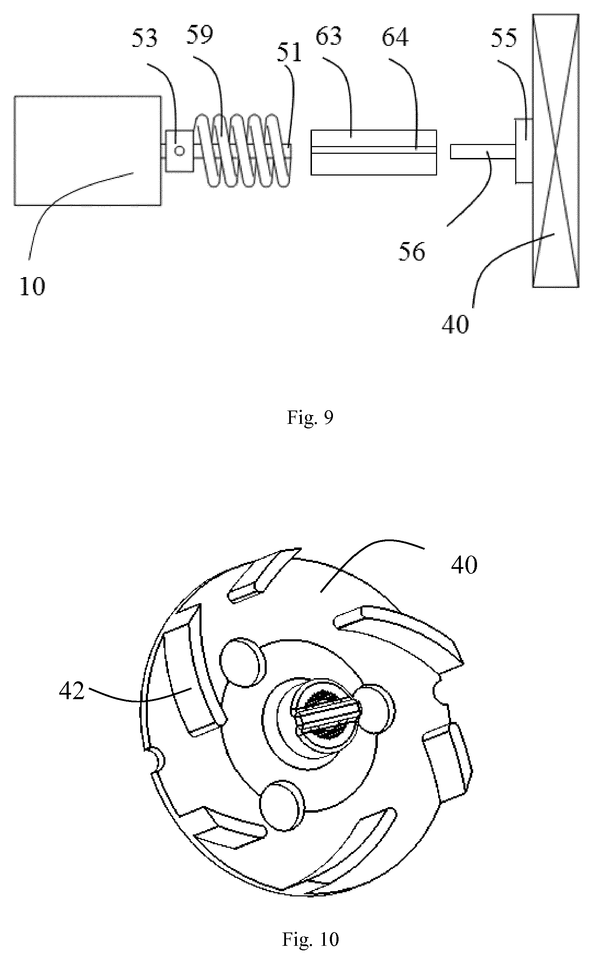

Fig. 9 illustrates a fluid generating apparatus in accordance with a fourth embodiment of the present invention. In this embodiment, the connecting base 55 includes a rod-shaped or tubular coupling portion 56 that is separate from and coaxial with the driving shaft 51. The resilient member 59 is a helical spring helically surrounding the coupling portion 56 and driving shaft 51. A connecting tube 63 with a variable inner diameter is disposed to surround the coupling portion 56 and the driving shaft 51, i.e., the coupling portion 56 and the driving shaft 51 are respectively inserted into opposite ends of the connecting tube 63. The connecting tube 63 is surrounded by the resilient member 59. The connecting tube 63 tightly holds around the coupling portion 56 and the driving shaft 51 when the inner diameter of the resilient member 59 decreases.

In this embodiment, the connecting tube 63 has a C-shaped cross-section. That is, a body of the connecting tube 63 has an axially extending slit 64, so that the inner diameter of the connecting tube 63 is capable of decreasing to thereby tightly hold around the coupling portion 56 and the driving shaft 51. Preferably, the connecting tube 63 is flexible so that it can return to its original state upon removal of the external force.

Understandably, the fluid generating device 40 may be a fan used as a ventilation fan, or a fan used in a range hood and so on, or an impeller of a pump such as a drain/circulation pump of a washing machine or dishwasher. Fig. 10 illustrates an example of a fluid generating device 40 utilized in the above embodiments. In this embodiment, the fluid generating device 40 is an impeller 40 which is preferably a unidirectional impeller. The unidirectional impeller includes a plurality of arc-shaped blades 42 bent in the same direction (clockwise direction or anticlockwise direction). In comparison with a bidirectional impeller with straight blades, the curved blades can increase efficiency of the impeller. It should be understood, however, that the impeller 40 of the present invention may also use straight blades.

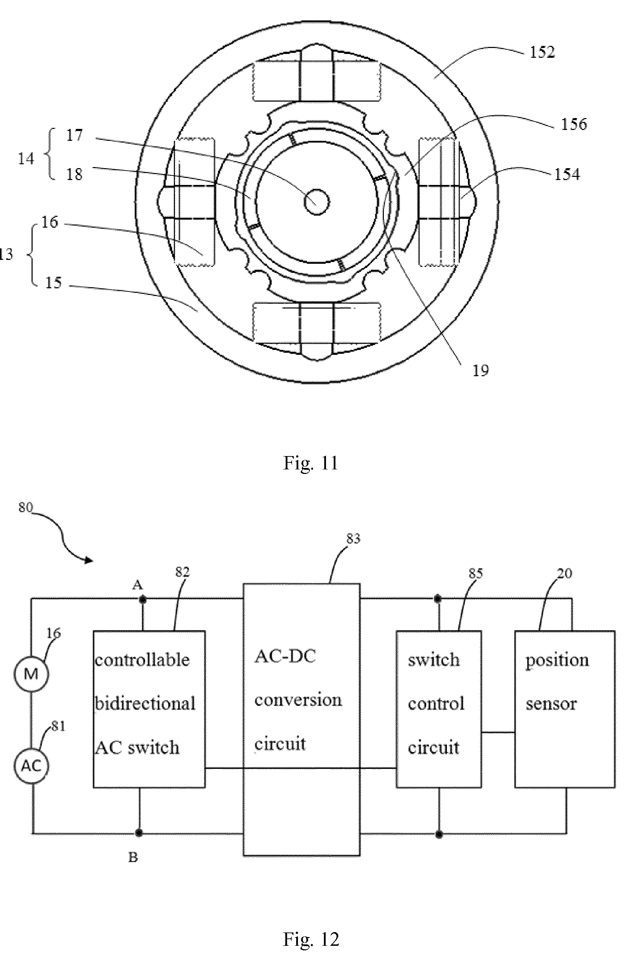

Fig. 11 illustrates a single phase permanent magnet brushless motor 10 utilized in the above embodiment. The motor is of an inner rotor type. The motor 10 includes a stator 13 and a rotor 14. The stator 13 includes a stator core such as a laminated stator core 15 and a winding 16 wound around the stator core 15. The stator core 15 includes a yoke 152 and a plurality of stator teeth 154 extending inwardly from the yoke 152. The rotor 14 includes a rotary shaft 17 and permanent magnetic poles 18. Outer surfaces of the permanent magnetic poles 18 confront inner end surfaces of the stator teeth 154 of the stator core 15 with an air gap formed there between to allow the rotor 14 to rotate relative to the stator 13. Preferably, the air gap is a substantially even air gap, i.e. most part of the outer surfaces of the permanent magnetic poles 18 are coaxial with most part of the inner surface of the stator teeth 154. Ends of the stator teeth 154 away from the yoke 152 are connected together to form a ring 156. A plurality of positioning slots 19 is formed in an inner surface of the ring 156. The provision of the positioning slots 19 makes the rotor 14 stop at a position deviating from a dead point (i.e. a center line of the permanent magnetic pole deviates from a center line of a corresponding stator tooth by an angle) when the stator windings 16 are not energized. Preferably, the number of the teeth and the number of the positioning slots 19 are directly proportional to the number of the rotor permanent magnetic poles, and the stator teeth and the ring are integrally formed and are wound with the stator winding before being assembled to the yoke of the stator core. Alternatively, ends of adjacent stator teeth 154 may be separated from each other by a slot opening. The motor further includes a position sensor 20 (Fig. 12) such as a Hall sensor or a photo sensor. The position sensor 20 is used to sense the position of the rotor.

Fig. 12 is a block diagram showing a driving circuit 80 of the single phase permanent magnet brushless motor of the present invention. In the driving circuit 80, the stator windings 16 and an alternating current (AC) power 81 are connected in series between two nodes A and B. The AC power 81 is preferably a commercial AC power supply with a fixed frequency such as 50 Hz or 60 Hz and a supply voltage may be, for example, 110V, 220V or 210V. A controllable bidirectional AC switch 82 is connected between the nodes A and B, in parallel with the series-connected stator windings 16 and AC power 81. The bidirectional AC switch 82 is preferably a triode AC switch (TRIAC) having two anodes connected to the two nodes A and B, respectively. It should be understood that the controllable bidirectional AC switch 82 may be two silicon control rectifiers reversely connected in parallel, and control circuits may be correspondingly configured to control the two silicon control rectifiers in a preset way. An AC-DC conversion circuit 83 is connected between the two nodes A and B, in parallel with the switch 81. An AC voltage between the two nodes A and B is converted by the AC-DC conversion circuit 83 into a low voltage DC. The position sensor 20 may be powered by the low voltage DC power outputted from the AC-DC conversion circuit 83, for detecting the position of the magnetic poles of the permanent magnet rotor 14 of the synchronous motor 10 and outputting corresponding signals. A switch control circuit 85 is connected with the AC-DC conversion circuit 83, the position sensor 20 and the bidirectional AC switch 82, and is configured to control the bidirectional switch 82 to switch between a switch-on state and a switch-off state in a predetermined way, based on the magnetic pole position of the permanent magnet rotor and the polarity of the AC power source, such that the stator winding 16 urges the rotor to rotate only in the above-mentioned fixed starting direction during a starting phase of the motor. In this embodiment, in a case that the controllable bidirectional AC switch 82 is switched on, the two nodes A and B are short-circuited, and the AC-DC conversion circuit 83 does not consume electric energy because there is no electrical current flows through the AC-DC conversion circuit 83, hence, the utilization efficiency of electric energy can be improved significantly.

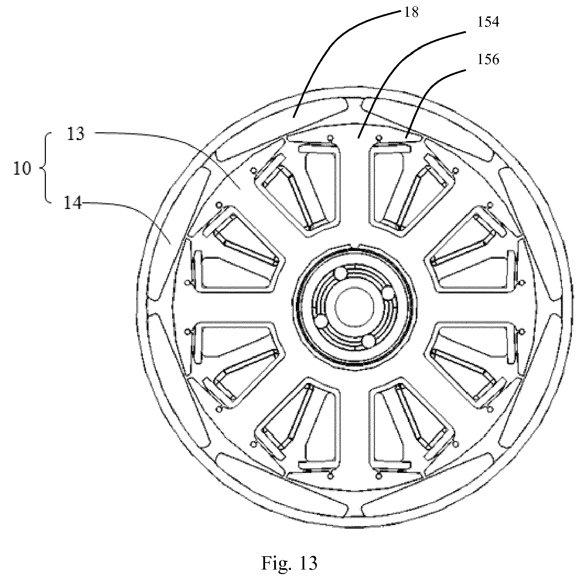

Fig. 13 illustrates another type of motor 10 utilized in the above embodiment. The motor 10 is of an outer rotor type, with the rotor 14 disposed surrounding the stator 13. An uneven air gap is formed between inner surfaces of the permanent magnetic poles 18 of the rotor and outer end surfaces of the stator teeth 154. Preferably, the air gap at each of the permanent magnetic poles 18 is symmetrical about a center line of the each of the permanent magnetic poles, and has a radial width gradually increasing from a center to two ends of the each of the permanent magnetic poles 18. A slot opening is formed between tips 156 of each two adjacent stator teeth 154. A circumferential width of the slot is less than or equal to five times of a minimum radial width of the air gap. When the rotor 14 is at an initial position, i.e. the stator winding is not energized, a center of the tip 156 of the stator tooth 154 is radially aligned with a junction of two adjacent magnetic poles of the rotor. As such, the rotor can be positioned at a position deviating from the dead point.

Although the invention is described with reference to one or more preferred embodiments, it should be appreciated by those skilled in the art that various modifications are possible. For example, the motor may be of an inner rotor type or an outer rotor type. The air gap between the stator and rotor may be even or uneven. The material of the permanent magnet may be rare earth material or another material such as ferrite. When the inner rotor motor is used, the permanent magnetic poles may be directly fixed to the rotary shaft of the rotor. Alternatively, the rotor core may be fixed to the rotary shaft, and then the permanent magnetic poles are fixed to an outer surface of the rotor core (i.e. surface mounted permanent magnetic poles), or are inserted into the rotor core (i.e. embedded permanent magnetic poles). Therefore, the scope of the invention is to be determined by reference to the claims that follow.

## Claims

1. A fluid generating apparatus comprising:
a single phase motor comprising a stator and a rotor rotatable relative to the stator;
a fluid generating device comprising a plurality of blades; and
a clutch connected between the rotor and the fluid generating device for transmitting torque from the rotor to the fluid generating device;
wherein the clutch comprises a resilient member having one end connected to the rotor for rotation with the rotor and the other end connected to the fluid generating device for driving the fluid generating device to rotate.

2. The fluid generating apparatus of claim 1, wherein the clutch allows the rotor to rotate relative to the fluid generating device at the phase of startup of the rotor, after the rotor starts along a predetermined startup direction and energy stored in the resilient member reaches a certain value, the end of the resilient member connected to the fluid generating device drives the fluid generating device to rotate along the predetermined startup direction.

3. The fluid generating apparatus of claim 1, wherein the clutch comprises a connecting base connected to the fluid generating device, the connecting base comprising a coupling portion, the rotor comprises a driving shaft, the resilient member surrounds an outer circumference of the driving shaft and the coupling portion, wherein when a rotation speed of the driving shaft is greater than a rotation speed of the connecting base, an inner diameter of the resilient member gradually decreases so as to gradually couple the coupling portion with the driving shaft, such that the rotation speed of the coupling portion gradually approaches or reaches the rotation speed of the driving shaft.

4. The fluid generating apparatus of claim 1, wherein the rotor of the motor comprises a driving shaft, the clutch further comprises a mounting base attached to the driving shaft, and the one end of the resilient member is attached to the mounting base such that the one end of the resilient member is rotatable with the driving shaft synchronously.

5. The fluid generating apparatus of any one of claims 1 to 4, wherein the single phase motor is a single phase permanent magnet direct current brushless motor or a single phase permanent magnet synchronous motor.

6. The fluid generating apparatus of any one of claims 1 to 5, further comprising a protective tube mounted around an outer circumference of the resilient member

7. The fluid generating apparatus of claim 1, wherein the resilient member is a helical spring.

8. The fluid generating apparatus of any one of claims 1 to 7, wherein the blades are arc-shaped and bent in the same direction.

9. The fluid generating apparatus of any one of claims 1 to 8, wherein the single phase motor further comprises a driving circuit, the rotor being a permanent magnet rotor, the stator comprising a stator winding adapted to be connected in series with an AC power source between a first node and a second node, the driving circuit comprising:
a controllable bidirectional AC switch connected between the first node and the second node;
an AC-DC conversion circuit connected in parallel with the controllable bidirectional AC switch between the first node and the second node;
a position sensor configured to detect a magnetic pole position of the permanent magnet rotor; and
a switch control circuit configured to control the controllable bidirectional AC switch to be switched between a switch-on state and a switch-off state in a predetermined way, based on the magnetic pole position of the permanent magnet rotor and the polarity of the AC power source such that the stator winding drives the rotor to rotate only in the predetermined direction,
wherein there is no current flowing through the AC-DC conversion circuit when the first node and the second node are short circuited by the controllable bidirectional AC switch.

10. The fluid generating apparatus of any one of claims 1 to 9, wherein the rotor comprises a plurality of permanent magnetic poles, the stator comprises a stator core and a stator winding wound around the stator core, the stator core comprises a plurality of stator teeth, each of the stator teeth comprises an end surface facing the rotor permanent magnetic poles, and the major part of the end face is coaxial with the rotor.

11. The fluid generating apparatus of claim 10, wherein the end face of each of the stator teeth defines a positioning groove/recess/hole/opening.

12. The fluid generating apparatus of any one of claim 1 to 9, wherein the rotor is of an outer rotor type and comprises a plurality of magnetic poles, the stator comprises a stator core and a stator winding wound around the stator core, the stator core comprises a plurality of stator teeth allowing the stator winding to wind therearound, and when the rotor is at an initial position, a center of the stator tooth is aligned with a junction of two adjacent magnetic poles of the rotor.

13. The fluid generating apparatus of claim 12, wherein an uneven air gap is formed between the magnetic poles and end surfaces of the stator teeth, the air gap corresponding each of the magnetic poles is symmetrical about a center line of the each of the magnetic poles, and the air gap at each of the magnetic poles has a radial width gradually increasing from a center to two ends of the each of the magnetic poles.

14. The fluid generating apparatus of any one of claims 1 to 13, wherein the fluid generating device is a fan.

15. The fluid generating apparatus of any one of claims 1 to 13, wherein the fluid generating device is an impeller of a pump.
